(19) Europäisches Patentamt
European Patent Office
Office européen des brevets

(11) Veröffentlichungsnummer : **0 027 939**
**B1**

(12) # EUROPÄISCHE PATENTSCHRIFT

(45) Veröffentlichungstag der Patentschrift : **16.02.83**

(51) Int. Cl.[3] : **C 08 F236/08**, C 08 F210/02, C 08 F 4/68

(21) Anmeldenummer : **80106194.6**

(22) Anmeldetag : **11.10.80**

(54) **Alternierende Isopren-Ethylen-Copolymere sowie ein Verfahren zu ihrer Herstellung.**

(30) Priorität : **25.10.79 DE 2943129**

(43) Veröffentlichungstag der Anmeldung : **06.05.81 Patentblatt 81/18**

(45) Bekanntmachung des Hinweises auf die Patenterteilung : **16.02.83 Patentblatt 83/07**

(84) Benannte Vertragsstaaten : **BE DE FR GB IT NL**

(56) Entgegenhaltungen :
**DE A 2 113 164**
**DE A 2 128 804**
**GB A 1 338 395**
**DERWENT JAPANESE PATENTS REPORT, Band T, Nr. 20, 20. Juni 1972, Derwent Publications Ltd. London, WCIX8RP, GB, « Polymer », Seite 6, Nr. 32.319T**
**CHEMICAL ABSTRACTS, Band 79, Nr. 12, 24. September 1973, Seiten 62, 63 Zusammenfassung Nr. 67616e Columbus, Ohio, US**

**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Wieder, Wolfgang, Dr.**
**Walter-Flex-Strasse 11**
**D-5090 Leverkusen 1 (DE)**
Erfinder : **Witte, Josef, Dr.**
**Haferkamp 10**
**D-5000 Köln 80 (DE)**

**EP 0 027 939 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Alternierende Isopren-Ethylen-Copolymere sowie ein Verfahren zu ihrer Herstellung

Die Erfindung betrifft alternierende Isopren-Ethylen-Copolymere mit bestimmter Konfiguration und Molgewicht sowie ein Verfahren zu ihrer Herstellung durch Lösungspolymerisation in Gegenwart eines vanadiumhaltigen metallorganischen Mischkatalysators.

Alternierende Isopren-Ethylen-Copolymere sind in der DE-OS 2 113 164 und DE-OS 2 128 804 beschrieben. Das erwähnte Herstellungsverfahren liefert in schlechten Ausbeuten Produkte, in denen die Isopren-Einheiten nicht stereospezifisch angeordnet sind. Diese Produkte sind in den angeführten Beispielen begleitet von ethylenreichen Copolymerisaten, von denen sie extraktiv abgetrennt werden müssen.

Die in den genannten deutschen Offenlegungsschriften beschriebenen Verfahren liefern Produkte mit einer Mikrostruktur, die von den Polymerisationsbedingungen weitgehend unabhängig ist. Es entstehen Produkte, deren Isopren-Einheiten zu etwa 60 % in der 1,4-Konfiguration und zu etwa 40 % in 3, 4-Konfiguration eingebaut sind. Der cis-1,4-Gehalt ist stets höher als der trans-1,4-Gehalt, beispielsweise im Verhältnis von etwa 4 : 1. Die Glastemperaturen solcher Copolymerer sind mit ca. – 55 °C angegeben.

Die nach dem erfindungsgemäßen Verfahren hergestellten alternierenden Isopren-Copolymeren besitzen eine andere Mikrostruktur und stellen eine Produktklasse dar, die bisher unbekannt ist. Die erfindungsgemäßen Copolymere sind gekennzeichnet durch einen hohen Alternierungsgrad, d. h. mehr als 80 Mol-%, vorzugsweise mehr als 90 Mol-% der eingebauten Monomereinheiten liegen in der sich wiederholenden Sequenz

—[Isopren-Ethylen]—

vor. Weiterhin sind die erfindungsgemäßen Copolymeren dadurch gekennzeichnet, daß von den eingebauten Isopren-Einheiten mehr als 80 Mol-%, vorzugsweise mehr als 90 Mol-% in der 1,4-Konfiguration vorliegen, wobei diese zumehr als 70 Mol-%, vorzugsweise mehr als 80 Mol-% aus trans Anordnungen besteht.

Weniger als 5 Mol-% des eingebauten Isoprens liegt in 3,4-Konfiguration vor. Die überwiegende Mikrostruktur der erfindungsgemäßen Copolymeren besteht somit aus Einheiten, die durch die Formel

$$-\left[CH_2-CH_2-CH_2-\underset{CH_3}{\underset{|}{C}}=CH-CH_2\right]_n-$$

wiedergegeben werden können. Die Glastemperatur der erfindungsgemäßen Copolymeren liegt zwischen – 70 °C und – 90 °C, vorzugsweise bei – 80 ± 5 °C, ermittelt durch *DSC*-Messungen (differential scan calorimetry). Die Mooney-Viskositäten der erfindungsgemäßen Copolymeren liegen zwischen 30 und 150, vorzugsweise zwischen 40 und 120, besonders bevorzugt zwischen 50 und 80 [ML 1 + 4 (100 °C)]. Die Viskositätszahlen [η], gemessen bei 25 °C in Toluol, liegen zwischen 0,5 und 6, vorzugsweise zwischen 1,0 und 3,5.

Die erfindungsgemäßen Copolymeren können hergestellt werden, indem man die Copolymerisation in Gegenwart eines Katalysators durchführt, der aus

a) einer Vanadiumverbindung der Formel

$$VO\ (OR)_2X \text{ und}$$

b) einer aluminiumorganischen Verbindung der Formeln

$$HAlR_2',\ Al\ R_3',\ R_2'AlY$$

besteht.

Das molare Verhältnis b/a beträgt zwischen 100 : 1 und 1 : 10, vorzugsweise zwischen 10 : 1 und 1 : 1.

Der Substituent R in obliger Formel bedeutet eine geradkettige, verzweigte oder cyclische Alkylgruppe mit 1-20 C-Atomen, bevorzugt mit 1-8, besonders bevorzugt mit 4-8 C-Atomen. Bevorzugt ist mindestens eine der Alkylgruppen verzweigt. Beide Alkylgruppen sind besonders bevorzugt verzweigt. Der Substituent X stellt eine Halogengruppe (Chlor, Brom) dar.

Der Substituent R' bedeutet eine geradkettige, verzweigte oder cyclische Alkylgruppe mit 1-8 C-Atomen.

Y stellt eine Halogengruppe (Chlor, Brom, Jod) dar.

Als Vanadiumverbindungen a) seien beispielhaft genannt:

Dimethoxivanadiumoxichlorid
Diethoxivanadiumoxichlorid

Dipropoxivanadiumoxichlorid
Di-isopropoxivanadiumoxichlorid
Dibutoxivanadiumoxichlorid
Diisobutoxivanadiumoxichlorid
Di-sek. butoxivanadiumoxichlorid
Di-tert.butoxivanadiumoxichlorid
Dipentyloxivanadiumoxichlorid
Di-isoamyloxivanadiumoxichlorid
Di-neopentyloxivanadiumoxichlorid
Dihexyloxivanadiumoxichlorid
Di-(2-ethylhexyloxi)vanadiumoxichlorid
2-Ethylhexyloxineopentyloxivanadiumoxichlorid
n-Butyloxineopentyloxivanadiumoxichlorid
2-Ethylbutoxi-neopentyloxivanadiumoxichlorid
2-Methylbutoxineopentyloxivanadiumochlorid
Isobutoxineopentyloxivanadiumoxichlorid
n-Butoxineopentyloxivanadiumoxichlorid

Besonders bevorzugt werden Di-neopentyloxivanadiumoxichlorid, Di-(2-Ethylhexyloxi) vanadiumoxichlorid, 2-Ethylhexyloxineopentyloxivanadiumoxichlorid, 2-Ethylbutoxyneopentyloxivanadiumoxichlorid, 2-Methylbutoxineopentyloxivanadiumoxichlorid, n-Butyloxineopentyloxivanadiumoxichlorid.

Als Aluminiumverbindungen b) seien beispielhaft genannt :

Trimethylaluminium
Triethylaluminium
Tripropylaluminium
Tributylaluminium
Triisobutylaluminium
Tri-cyclohexylaluminium
Trioctylaluminium
Diisobutylaluminiumhydrid
Diethylaluminiumchlorid
Diethylaluminiumbromid
Diethylaluminiumjodid

Besonders bevorzugt wird Triisobutylaluminium.

Die Katalysatorkomponente a) wird bevorzugt in Mengen von 0,01-15 mMol, bezogen auf 100 g Ethylen, besonders bevorzugt in Mengen von 0,1 bis 10 mMol eingesetzt.

Das erfindungsgemäße Verfahren ist weiterhin dadurch gekennzeichnet, daß die Polymerisation in Lösung stattfindet. Als Lösungsmittel sind Aromaten, Cycloaliphaten und Aliphaten geeignet, z. B. Benzol, Toluol, Pentan, Hexan, Heptan, Cyclohexan, sowie Chlorkohlenwasserstoffe wie Dichlormethan. Die Polymerisation kann aber auch in überschüssigem Isopren als Lösungsmittel durchgeführt werden. Die Reaktion wird bei Temperaturen zwischen − 80 °C und + 100 °C, gegebenenfalls unter Druck, durchgeführt, wobei Temperaturen zwischen − 60 °C und + 60 °C bevorzugt werden. Eine bevorzugte Ausführungsform der Erfindung besteht darin, Isopren und Katalysator, gegebenenfalls in einem Lösungsmittel vorzulegen und Ethylen bis zum gewünschten Endumsatz einzuleiten. Es können aber auch, im Sinne einer üblichen Lösungspolymerisation, die Monomeren in Lösungsmittel vorgelegt und der Katalysator anschließend zugegeben werden.

Isopren wird im Überschuß eingesetzt, d. h. das molare Verhältnis Isopren/Ethylen ist stets größer als 1 : 1, vorzugsweise zwischen 1,1-100 : 1.

Nach Beendigung der Polymerisation wird der Katalysator in üblicher Weise durch Zugabe von Aminen, Alkoholen oder Carbonsäuren wie Triethylamin, Ethanol, Ameisensäure entaktiviert. Nach Zugabe eines Stabilisators, z. B. 2,6-Di-tert.butylmethylphenol, kann das erfindungsgemäße Produkt durch Ausfällen oder Strippen isoliert werden. Der gesamte Prozeß, Polymerisation und Aufarbeitung, kann diskontinuierlich oder kontinuierlich durchgeführt werden.

Ein besonderer Vorzug des erfindungsgemäßen Verfahrens besteht darin, daß keine nennenserten Mengen, beispielsweise nicht mehr als 5 %, an unlöslichen Polymeren entstehen, wie es gemäß den Verfahren der Deutschen Offenlegungsschriften 2 113 164 und 2 128 804 der Fall ist.

Die erfindungsgemäßen Copolymeren eignen sich für den Einsatz als Synthesekautschuk. Sie lassen sich in herkömmlicher Weise verarbeiten und vulkanisieren. Die Produkte können zur Herstellung von Autoreifen und technischen Gummiartikeln verwendet werden.

## Beispiel 1

In einem trockenen Kolben wurden unter Stickstoffatmosphäre 250 ml Isopren, 10 mMol i-$Bu_3Al$ und 1 mMol Dineopentyloxivanadiumoxichlorid vorgelegt. Bei 0 °C wurden dann innerhalb 30 Minuten 10 g

Ethylen eingeleitet, wobei die Lösung viskoser wurde. Nach Beendigung der Ethylen-Zugabe wurde noch 10 Minuten bei 0 °C weitergerührt, in Alkohol ausgefällt, der etwas 2,6-Ditert.butylmethylphenol als Stabilisator enthielt und bei 50 °C im Vakuum getrocknet. Man erhielt 27 g (78 %, bezogen auf Ethylen), eines kautschukartigen Produktes. [η], gemessen in Toluol bei 25 °C, betrug 1,25 dl/g. Das Produkt hatte folgende Mikrostruktur : (NMR-spektroskopisch bestimmt) : 47,9 Mol-% 1,4-Isopren, 2,0 Mol-% 3,4-Isopren, 50,1 Mol-% Ethylen. Trans/cis von 1,4-Isopren 83,2/16,8.

Beispiel 2

Wie Beispiel 1, jedoch bei − 20 °C statt bei 0 °C ausgeführt. Ausbeute : 25 g (73 %, bezogen auf Ethylen). η = 1,67 dl/g, Mikrostruktur : 47,8 Mol-% 1,4-Isopren, 1,0 Mol-% 3,4-Isopren, 51,2 Mol-% Ethylen, trans/cis von 1,4-Isopren 85,0/15,0.

Beispiel 3

Wie Beispiel 1, jedoch bei − 40 °C. Ausbeute : 31 g (90 %, bezogen auf Ethylen). η = 2,48 dl/g, Mikrostruktur : 47,6 Mol-% 1,4-Isopren, 1,1 Mol-% 3,4-Isopren, 51,3 Mol-% Ethylen. Trans/cis von 1,4-Isopren 86,0/14,0. Das Produkt zeigte bei einer DSC-Analyse folgende Werte : Glasübergang : − 82 °C. Eine peroxidisch vernetzte Probe zeigte bei 8-facher Dehnung Kristallisation.

Beispiel 4

Wie Beispiel 3, jedoch mit 5 mMol i-$Bu_3Al$ und 0,5 mMol Dineopentyloxivanadiumoxichlorid. Ausbeute : 25 g (73 %, bezogen auf Ethylen). η = 2,21 dl/g.

Beispiel 5

In einem trockenen Kolben wurden unter Stickstoffatmosphäre 250 ml Hexan, 250 ml Isopren, 10 mMol i-$Bu_3Al$ und 1 mMol Dineopentyloxivanadiumoxichlorid vorgelegt. Bei − 40 °C wurden innerhalb 60 Minuten 20 g Ethylen eingeleitet. Weiteres Vorgehen wie Beispiel 1. Ausbeute : 68 g (99 %, bezogen auf Ethylen). ML 1 + 4 (100 °C) : 51.

Beispiel 6

Wie Beispiel 5, jedoch in 500 ml Hexan. Eingeleitet wurden in 120 Minuten 40 g Ethylen. Ausbeute : 86 g (63 %, bezogen auf Ethylen). η = 2,03 dl/g. ML 1 + 4 : 65.

**Ansprüche**

1. Isopren-Ethylen Copolymer mit alternierenden Monomereinheiten, bei dem zu mehr als 80 Mol-% sich wiederholende

—Isopren-Ethylen—

Sequenzen vorhanden sind, wobei das eingebaute Isopren zu mehr als 80 Mol-% in 1,4-Konfiguration vorliegt, die zu mehr als 70 Mol-% aus einer trans-Anordnung besteht und weniger als 5 Mol-% des eingebauten Isoprens in 3,4-Konfiguration vorliegt, mit einer Glastemperatur zwischen − 70 °C und − 90 °C, einer Mooney-Viskosität zwischen 30 und 150 [MI 144 (100 °C)] und einer Viskositätszahl [η], gemessen bei 25 °C in Toluol, zwischen 0,5 und 6.

2. Isopren-Ethylen Copolymer gemäß Anspruch 1, bei dem zu mehr als 90 Mol-% sich wiederholenden

—Isopren-Ethylen—

Sequenzen vorhanden sind, wobei das eingebaute Isopren zu mehr als 90 Mol-% in 1,4-Konfiguration vorliegt, die zu mehr als 80 Mol-% aus einer trans-Anordnung besteht.

3. Isopren-Ethylen Copolymer gemäß Ansprüchen 1 und 2 mit einer Glastemperatur zwischen − 75 °C und − 85 °C, einer Mooney-Viskosität zwischen 40 und 120 [ML 144 (100 °C)] und einer Viskositätszahl [η], gemessen bei 25 °C in Toluol, zwischen 1,0 und 3,5.

4. Verfahren zur Herstellung einer Isopren-Ethylen Copolymeren gemäß Ansprüchen 1-3, dadurch gekennzeichnet, daß die Polymerisation in Lösung bei einer Temperatur zwischen − 80 °C und + 100 °C in Gegenwart eines Katalysatorsystems durchgeführt wird, das aus

a) einer Vanadiumverbindung der Formel

$VO(OR)_2$ X und

b) einer aluminiumorganischen Verbindung der Formeln

Al $R_3'$, $HAlR_2'$ oder $R_2'ALY$

besteht,
in denen
R eine Alkylgruppe mit 1-20 C-Atomen,
X eine Halogengruppe,
R' eine Alkylgruppe mit 1-8 C-Atomen und
Y eine Halogengruppe
bedeuten, wobei das molare Verhältnis b/a zwischen 100 : 1 und 1 : 10 liegt.

5. Verfahren gemäß Anspruch 4, dadurch gekennzeichnet, daß ein Katalysatorsystem bestehend aus Di-neopentyloxivanadiumoxichlorid, Di-(2-ethylhexyloxi) vanadiumoxichlorid 2-Ethylhexyloxineopentyloxivanadiumoxichlorid, n-Butyloxineopentyloxivanadiumoxichlorid, 2-Ethylbutoxineopentyloxivanadiumoxichlorid 2-Methylbutoxineopentyloxivanadiumoxichlorid, und/oder Isobutoxineopentyloxivanadiumoxichlorid und Triisobutylaluminium eingesetzt wird.

6. Verfahren gemäß Ansprüchen 4 und 5, dadurch gekennzeichnet, daß bei einer Temperatur von − 60 °C bis + 60°C polymerisiert wird.

7. Verfahren gemäß Ansprüchen 4 bis 6, dadurch gekennzeichnet, daß das molare Verhältnis von b/a im Katalysatorsystem zwischen 10 : 1 und 1 : 1 liegt.

8. Verfahren gemäß Ansprüchen 4 bis 7, dadurch gekennzeichnet, daß Isopren und Ethylen im molaren Verhältnis von größer als 1 : 1 polymerisiert wird.

9. Verfahren gemäß Ansprüchen 4 bis 8, dadurch gekennzeichnet, daß Isopren und Ethylen im molaren Verhältnis von 1 : 1-100 : 1 polymerisiert wird.

10. Verfahren gemäß Ansprüchen 4 bis 9, dadurch gekennzeichnet, daß Isopren und Katalysator vorgelegt werden und anschließend Ethylen eingeleitet wird.

**Claims**

1. Isoprene-ethylene copolymer having alternating monomer units in which the proportion of recurring

—isoprene-ethylene—

sequences is more than 80 mol %, in which the proportion of built-in isoprene in the 1,4-configuration is more than 80 mol % which consits of more than 70 mol % of a trans-arrangement, and in which less than 5 mol % of the built-in isoprene is present in the 3,4-configuration, the copolymers having a glass temperature of between − 70 °C and − 90 °C, a Mooney-viscosity of between 30 and 150 [ML 1 + 4 (100 °C)] and a viscosity number [η], measured at 25 °C in toluene, of between 0.5 and 6.

2. Isoprene-ethylene copolymers according to claim 1, wherein the proportion of recurring

—isoprene-ethylene—

sequences is more than 90 mol %, and wherein the proportion of built-in isoprene in the 1,4-configuration is more than 90 mol % which consists of more than 80 mol % of a trans-arrangement.

3. Isoprene-ethylene copolymers according to claims 1 or 2, having a glass temperature of between − 75 °C and − 85 °C, a Mooney-viscosity of between 40 and 120 [ML 1 + 4 (100 °C)] and a viscosity number [η], measured at 25 °C in toluene, of between 1.0 and 3.5.

4. A process for the preparation of an isoprene ethylene copolymer according to claims 1-3, characterised in that polymerisation is carried out in solution at a temperature of between − 80 °C and + 100 °C in the presence of a catalyst system which consists of

a) a vanadium compound of the formula

$VO(OR)_2X$ and

b) an organoaluminium compound of formula

Al $R_3'$, $HAlR_2'$ or $R_2'ALY$

wherein
R represents an alkyl group containing from 1-20 carbon atoms,

X represents a halogen atom,

R' represents an alkyl group containing from 1 to 8 carbon atoms, and

Y represents a halogen atom,

the molar ration of b : a being between 100 : 1 and 1 : 10.

5. A process according to claim 4, characterised in that a catalyst system is used, consisting of dineopentyloxyvanadiumoxychloride, di-(2-ethylhexyloxy)-vanadiumoxychloride, 2-ethylhexyloxy-neopentyloxyvanadiumoxychloride, n-butyloxy-neopentyloxyvanadiumoxychloride, 2-ethylbutoxy-neopentyloxyvanadiumoxychloride, 2-methylbutoxy-neopentyloxyvanadiumoxychloride and/or isobutoxy-neopentyloxyvanadiumoxychloride and triisobutylaluminium.

6. A process according to claims 4 and 5, characterised in that polymerisation is carried out at a temperature of from − 60 °C to + 60 °C.

7. A process according to claims 4 to 6, characterised in that the molar ratio of b : a in the catalyst system is between 10 : 1 and 1 : 1.

8. A process according to claims 4 to 7, characterised in that isoprene and ethylene are polymerised in a molar ratio greater than 1 : 1.

9. A process according to claims 4 to 8, characterised in that isoprene and ethylene are polymerised in the molar ratio of 1.1-100 : 1.

10. A process according to claims 4 to 9, characterised in that isoprene and the catalyst are introduced initially and ethylene is subsequently introduced.

**Revendications**

1. Copolymère isoprène-éthylène à motifs monomères alternés, comportant pour plus de 80 moles % de motifs récurrents

—isoprène-éthylène—,

l'isoprène incorporé étant présent pour plus de 80 moles % dans la configuration 1, 4, qui consiste pour plus de 70 moles % en enchaînements trans, et moins de 5 moles % de l'isoprène incorporé étant dans la configuration 3, 4, d'une température de transition vitreuse comprise entre − 70 et − 90 °C, d'une viscosité Mooney entre 30 et 150 [Ml 144 (100 °C)] et d'un indice de viscosité [η] mesuré à 25 °C dans le toluène, entre 0,5 et 6.

2. Copolymère isoprène-éthylène selon la revendication 1, comportant pour plus de 90 moles % de motifs récurrents

—isoprène-éthylène—,

l'isoprène incorporé étant pour plus de 90 moles % dans la configuration 1, 4, qui consiste pour plus de 80 moles % en enchaînements trans.

3. Copolymère isoprène-éthylène selon les revendications 1 et 2 ayant une température de transition vitreuse entre − 75 et − 85 °C, une viscosité Mooney entre 40 et 120 [ML 144 (100 °C)] et un indice de viscosité [η], mesuré à 25 °C dans le toluène, entre 1,0 et 3,5.

4. Procédé pour la fabrication d'un copolymère isoprène-éthylène selon les revendications 1-3, caractérisé en ce que la polymérisation est effectuée en solution à une température comprise entre − 80 et + 100 °C en présence d'un système catalyseur qui consiste en

a) un composé de vanadium de formule

$VO(OR)_2X$ et

b) un composé organique d'aluminium de formules

$AlR_3'$, $HAlR_2'$ ou $R_2'ALY$

dans lesquelles

R représente un groupe alkyle en $C_1$-$C_{20}$,

X représente un groupe halogène,

R' représente un groupe alkyle en $C_1$-$C_8$ et

Y représente un groupe halogène,

le rapport molaire b/a étant compris entre 100 : 1 et 1 : 10.

5. Procédé selon la revendication 4, caractérisé en ce que l'on utilise un système catalyseur consistant en oxychlorure de dinéopentyloxyvanadium, oxychlorure de di-(2-éthylhexyloxy)vanadium, oxychlorure de 2-éthylhexyloxynéopentyloxyvanadium, oxychlorure de n-butyloxynéopentyloxyvanadium, oxychlorure de 2-éthylbutoxynéopentyloxyvanadium, oxychlorure de 2-méthylbutoxynéopentyloxyvanadium, et/ou oxychlorure d'isobutoxynéopentyloxyvanadium et en triisobutylaluminium.

6. Procédé selon les revendications 4 et 5, caractérisé en ce que l'on polymérise à une température de − 60 à + 60 °C.

7. Procédé selon les revendications 4 à 6, caractérisé en ce que le rapport molaire b/a dans le système catalyseur est compris entre 10 : 1 et 1 : 1.

8. Procédé selon les revendications 4 à 7, caractérisé en ce que l'on polymérise l'isoprène et l'éthylène dans un rapport molaire supérieur à 1 : 1.

9. Procédé selon les revendications 4 à 8, caractérisé en ce que l'on polymérise l'isoprène et l'éthylène dans un rapport molaire de 1 : 1-100 : 1.

10. Procédé selon les revendications 4 à 9, caractérisé en ce que l'on charge au préalable l'isoprène et le catalyseur et on introduit ensuite l'éthylène.